# EUROPÄISCHE PATENTSCHRIFT

(11) **EP 2 809 494 B1**
(45) Veröffentlichungstag und Bekanntmachung des Hinweises auf die Patenterteilung: **02.09.2015**
(21) Anmeldenummer: 13702587.0
(22) Anmeldetag: 16.01.2013
(51) Int. Cl.: B29C 49/20, B29C 49/42, B29C 47/00, B29D 22/00, B29L 22/00

(54) **VERFAHREN ZUR HERSTELLUNG EINES KUNSTSTOFFARTIKELS SOWIE TEIL DES BLASFORMWERKZEUGES**
METHOD FOR PRODUCING A PLASTIC ARTICLE, AND PART OF A BLOW-MOULD
PROCÉDÉ DE PRODUCTION D'UN ARTICLE EN MATIÈRE PLASTIQUE AINSI QU'ÉLÉMENT D'OUTIL DE SOUFFLAGE

(30) Priorität: 02.02.2012 DE 102012001928
(43) Veröffentlichungstag der Anmeldung: 10.12.2014
(73) Patentinhaber: Kautex Maschinenbau GmbH, 53229 Bonn (DE)
(72) Erfinder: VANMARCKE, Rene, 53844 Troisdorf (DE); SCHMIDT, Thilo, 50931 Köln (DE); DÖHMEN, Willi, 41065 Mönchengladbach (DE); WEILAND, Olaf, 53604 Bad Honnef (DE); WALBROEL, Stefan, 53757 Sankt Augustin (DE)
(74) Vertreter: Kohlmann, Kai
(86) Internationale Anmeldenummer: PCT/EP2013/050759
(87) Internationale Veröffentlichungsnummer: WO 2013/113558

(56) Entgegenhaltungen:
- DE-A1- 4 142 114
- JP-A- S57 159 623
- US-A- 3 162 707
- US-A1- 2009 162 472

## Beschreibung

Die Erfindung betrifft ein Verfahren zur Herstellung eines Kunststoffartikels umfassend das Extrudieren eines schlauchförmigen Vorformlings aus einem Extrudat sowie das Umformen des Vorformlings innerhalb eines Blasformwerkzeuges mit mindestens zwei Hälften unter Anwendung von Differenzdruck zu einem Hohlkörper, wobei ein Zwischenrahmen in dem schlauchförmigen Vorformling angeordnet und wenigstens ein Einbauteil in das Innere des Kunststoffartikels eingebracht wird.

Außerdem betrifft die Erfindung ein Blasformwerkzeug umfassend einen Zwischenrahmen.

Insbesondere bei der Herstellung großer Kunststoffbehälter durch Extrusionsblasformen ist es häufig wünschenswert, in den fertig zu stellenden Behälter Einbauteile einzubringen. Beispielsweise Kraftstoffbehälter für Kraftfahrzeuge aus thermoplastischem Kunststoff sind häufig mit Funktionsbauteilen/Einbauteilen versehen. Die Einbauteile können nach der Herstellung des Behälters manuell durch eine oder mehrere in diesem vorgesehene Revisionsöffnungen eingebracht werden. Insbesondere bei Kraftstoffbehältern aus thermoplastischem Kunststoff ist problematisch, dass die hierfür verwendeten Kunststoffe, in der Regel HDPE, nicht für Kohlenwasserstoffe diffusionsdicht sind. Deswegen werden Kraftstoffbehälter aus thermoplastischem Kunststoff aus Co-Extrudaten mit Barriereschichten für Kohlenwasserstoffe hergestellt. Hiermit ist es möglich, weitestgehend die Dichtigkeit des Kraftstoffbehälters zu gewährleisten, wobei jedoch bei mehrlagigem Wandaufbau die Barriereschicht durch nachträglich anzubringende Öffnungen in der Behälterwandung verletzt/unterbrochen wird, so dass im Bereich von Öffnungen in der Behälterwandung potentielle Leckagestellen geschaffen werden, die nach Fertigstellung des Behälters aufwändig abzudichten sind. Insbesondere um Einbauteile in den Behälter einzubringen, die größer als die vorzusehenden Revisionsöffnungen sind, können nach dem in der DE 602 18 237 T2 offenbarten Verfahren die Einbauteile während der Ausformung des Behälters durch Extrusionsblasformen mit umblasen werden. Die Befestigung einiger der Einbauteile, wie beispielsweise der Ventile, erfordert jedoch nach wie vor mehrere Öffnungen in der Behälterwandung.

In jüngster Zeit gehen die Bemühungen dahin, möglichst sämtliche Einbauteile bereits während der Herstellung des Kraftstoffbehälters in diesen einzubringen, um die Anzahl der erforderlichen Öffnungen in der Behälterwandung so klein wie möglich zu halten.

Im Stand der Technik ist der Einsatz von Zwischenrahmen beim Blasformen bekannt geworden. So beschreibt die DE 102 31 866 A1 ein gattungsgemäßes Verfahren zur Herstellung eines Kunststoffhohlkörpers, bei dem der schlauchförmige Kunststoffvorformling zu zwei flächigen Halbzeugen aufgeschnitten und die Halbzeuge getrennt durch einen entfernbaren Zwischenrahmen in ein Blasformwerkzeug eingelegt werden. Anschließend werden zwei Halbschalen geformt, wobei die Werkzeughälften durch den entfernbaren Zwischenrahmen voneinander getrennt sind, so dass sich die Halbschalen nicht berühren. Nach dem Öffnen der Werkzeughälften und dem Entfernen des Zwischenrahmens werden Einbauteile an der Innenseite mindestens einer Halbschale angebracht. Anschließend werden die Halbschalen zu dem Kunststoffhohlkörper verbunden.

Diese Verfahrensweise bereitet Schwierigkeiten bei der Handhabung des zu flächigen Halbzeugen aufgeteilten Vorformlings. Der Vorformling ist bedingt durch den stark erwärmten Kunststoff sehr instabil. Das Einlegen der flächigen Halbzeugen wird zusätzlich dadurch erschwert, dass die beiden Halbzeuge sich gegenseitig weder beim Transport zum Blaswerkzeug noch im Blaswerkzeug berühren dürfen, da sie sonst miteinander verkleben würden. Der Zwischenrahmen schafft hier nur bedingt Abhilfe.

Gemäß der DE 10 2009 030 492 A1 wird vorgeschlagen, den schlauchförmigen Vorformling zu einem C-förmigen Querschnitt aufzuschlitzen und dann in das Blasformwerkzeug einzulegen. Durch diesen C-förmigen Querschnitt bleibt die formstabilere runde Querschnittsform weitgehend erhalten. Das Innere des Vorformlings ist über den Schlitz zugänglich, so dass Einlegeteile vor dem Fertigblasen eingebracht werden können. Bedingt durch die nur partielle Öffnung des Vorformlings ist jedoch der Bewegungsspielraum zum Einbringen von insbesondere großen Einlegeteilen begrenzt.

Die US 3 162 707 A offenbart einen Zwischenrahmen für ein Blasformwerkzeug mit einer stationären Formhälfte und einer beweglichen Formhälfte. Der Zwischenrahmen ist mit flexiblen Bindemitteln versehen, wodurch der Zwischenrahmen in seiner Umfangsgeometrie veränderbar ist. Die Bindemittel umfassen Scharniere sowie an den oberen Ecken des Rahmens angeordnete Gelenke. Die unteren Ecken des Rahmens sind gelenkig mit Rückzugsarmen verbunden. Das Zusammenklappen des Rahmens erfolgt mit Hilfe eines Rohres, über das Luft in die Blasform eingeführt wird. Der zusammengeklappte Rahmen wird von einem schlauchförmigen Vorformling umgeben. Der Rahmen mit dem Vorformling befindet sich beim Blasformen zwischen den beiden Formhälften innerhalb des Blasformwerkzeugs.

Der Erfindung liegt die Aufgabe zugrunde, zu den vorgenannten Verfahren eine Alternative bereitzustellen, die ein problemloses Einbringen auch großer Einlegeteile bei verbesserter Handhabung der Extrudate ermöglicht.

Ausgehend von einem Verfahren zur Herstellung eines Kunststoffartikels der eingangs erwähnten Art, wird die Aufgabe dadurch gelöst, dass
- ein Zwischenrahmen in dem schlauchförmigen Vorformling angeordnet wird,
- der schlauchförmige Vorformling mittels des Zwischenrahmens zwischen den mindestens zwei Hälften des Blasformwerkzeuges angeordnet wird,
- der schlauchförmige Vorformling unter Zuhilfenahme des Zwischenrahmens im Blasformwerkzeug teilweise vorgeformt wird,
- anschließend der schlauchförmige Vorformling in mindestens zwei Teile getrennt wird,
- das Blasformwerkzeug zum Einbringen des wenigstens einen Einbauteils derart geöffnet wird, dass in jeder Hälfte des Blasformwerkzeuges ein Teil des getrennten Vorformlings verbleibt, gefolgt von den Verfahrensschritten:
   (a) Entfernen des Zwischenrahmens zwischen den mindestens zwei Hälften des Blasformwerkzeuges,
   (b) Einbringen des wenigstens einen Einbauteils in das Innere des teilweise ausgeformten Kunststoffartikels,
   (c) Schließen des Blasformwerkzeuges mit den Teilen des Vorformlings und dem wenigstens einen Einbauteil und
   (d) vollständiges Ausformen des Vorformlings zu einem Hohlkörper.

Mit dieser vorgeschlagenen Lösung wird es möglich, einen hohlen Kunststoffartikel von einem Blaskopf mittels eines Greifers zu übernehmen und in ein Blasformwerkzeug einzulegen, wobei während des Transportes der Vorformling weitgehend stabil bleibt, da für den Transport vom Extrusionskopf zum Blasformwerkzeug die stabilisierende weitestgehend runde Querschnittsform des schlauchförmigen Vorformlings erhalten bleibt. Die Zugänglichkeit zum Innenbereich des Vorformlings wird durch das erst nach dem Vorformen erfolgende Aufschneiden des Vorformlings in mindestens zwei Teile bestens gewährleistet. Sämtliche gewünschten Einlegeteile können eingebracht werden, diese verkleben mit dem pastösen Vorformling und sind nach dem Schließen des Blaswerkzeuges und fertigen Ausblasen des Kunststoffhohlkörpers im fertigen Blasformartikel fest eingebunden.

Der schlauchförmige Vorformling kann aber bereits auch schon als teilweise getrennter Vorformling in das Blasformwerkzeug eingebracht werden. Hierbei kann der schlauchförmige Vorformling mit einem etwa C-förmigen Querschnitt in das Blasformwerkzeug eingelegt werden, wobei das aus dem Extrusionskopf austretende oder bereits ausgetretene Extrudat dafür entsprechend aufgetrennt wird. Es bleibt auch hier der weitgehend runde Querschnitt des Vorformlings erhalten, der dem Vorformling eine gewisse Eigenstabilität verleiht.

Unabhängig davon, ob der schlauchförmige Vorformling einen geschlossenen oder C-förmigen Querschnitt aufweist, wird der Zwischenrahmen dafür eingesetzt, dass die mindestens zwei aus dem Vorformling gebildeten Teile voneinander getrennt handhabbar sind und nicht aneinander kleben.

Der Zwischenrahmen wird zu diesem Zweck in dem Vorformling angeordnet bevor dieser in mindestens zwei Teile getrennt wird, insbesondere in dem der Zwischenrahmen in den Vorformling eingebracht oder der schlauchförmige Vorformling über den Zwischenrahmen gebracht wird.

Der Vorformling wird an den Zwischenrahmen angelegt indem dieser gespreizt wird. Bei einem bereits aufgetrennten C-förmigen Vorformling kann ein starrer Zwischenrahmen zum Einsatz kommen, das Anlegen des Vorformlings an den Zwischenrahmen kann dann mittels Formvoreilern, die entsprechend verfahren werden, erfolgen. Der Einsatz von Formvoreilern kann auch bei der Verwendung von spreizbaren Zwischenrahmen vorgesehen werden. Unter Formvoreiler werden Teile des Blasformwerkzeuges verstanden die der eigentlichen Blasform vorgeschaltet sind und ähnlich wie Schieber den Vorformling gegen eine Gegenform, hier dem Zwischenrahmen, drücken und somit z. B. das Vorblasen vereinfachen, ohne dass das Blasformwerkzeug in Gänze geschlossen werden muss.

Es ist also vorgesehen, entweder den Vorformling mittels des Greifers über einen Zwischenrahmen zu stülpen oder den Zwischenrahmen in den vom Greifer gehaltenen Vorformling einzuschieben. Der Zwischenrahmen ist dabei so ausgeführt, dass er, nachdem er sich innerhalb des Vorformlings befindet, aufgespreizt werden kann, bis sich der Vorformling um den Zwischenrahmen herum erstreckt und an diesem anliegt. Der Zwischenrahmen mit dem darum befindlichen Vorformling ist dabei so angeordnet, dass er sich nach dem Schließen des Blasformwerkzeuges zwischen den beiden Hälften des Blasformwerkzeuges befindet. Zusätzlich können, wie bereits oben ausgeführt, Formvoreiler eingebunden werden.

Der Zwischenrahmen kann zusätzlich temperiert werden, wodurch das Anlegen des Vorformlings an den Zwischenrahmen unterstützt wird.

Weiterbildungsgemäß ist vorgesehen, dass ein Vorformen des Vorformlings über im Zwischenrahmen angeordnete Blasdüsen erfolgt. Dies hat den Vorteil, dass die beiden Werkzeughälften unabhängig von Versorgungsleitungen für den Blasvorgang bewegt werden können, da diese in Gänze am Zwischenrahmen angeordnet sind.

Das Auftrennen des Vorformlings in mindestens zwei Teile erfolgt vorteilhafterweise mittels im Zwischenrahmen angeordneter Trennvorrichtung. Hierbei kann die Trennvorrichtung in dem Zwischenrahmen so angeordnet sein, dass sie den Rahmen einmal umläuft oder auch mehrere Trennvorrichtungen am Umfang angeordnet sind und nur Teilbereiche umlaufen. Ebenfalls kann die Trennvorrichtung in oder an einer der Hälften des Blasformwerkzeuges angeordnet sein oder separat von außen zugeführt werden, wie dies weiter unter anhand eines Beispiels dargelegt wird.

Als Trennvorrichtung kann hier zum Beispiel ein Messer, eine Heißtrennung, ein Laser oder ein Abtrennen mittels entsprechender Schneidkannten in den Werkzeughälften vorgesehen werden.

Es ist aber auch genauso denkbar, dass das Trennen des Vorformlings in mindestens zwei Teile mittels von außen im Bereich des Zwischenrahmens ansetzender Trennvorrichtung erfolgt. Es wird also z. B. vorgeschlagen, ein oder mehrere Messer von außen im Bereich des Zwischenrahmens anzusetzen, um den Vorformling zu trennen und somit den Zwischenrahmen quasi als Schnittunterlage zu verwenden.

In einer weiteren Fortbildung ist vorgesehen, dass mittels des Zwischenrahmens zwei getrennte Hohlräume zwischen dem Vorformling und dem Zwischenrahmen gebildet werden.

In diesem Fall verfügt der Zwischenrahmen über eine Trennwand, wobei dann entweder ein starrer Rahmen in Verbindung mit dem C-förmigen Vorformling zum Einsatz kommt, oder beim Einsatz eines klappbaren Zwischenrahmens eine etwas komplexere Konstruktion für die mitklappende Trennwand erforderlich ist. In beiden Fällen wird jedoch erreicht, dass der Vorformling nun zwei getrennte Hohlräume ausbildet die über Blasdüsen mit unterschiedlichen Drücken beaufschlagt werden können und somit der Vorformling vorgeformt wird. Die Blasdüsen können hierbei im Zwischenrahmen angeordnet sein.

Das Aufbringen unterschiedlicher Drücke in den beiden Kammern kann beispielsweise dann erforderlich werden, wenn ein Kunststoffhohlkörper erzeugt werden soll, dessen eine Hälfte eine komplexere Oberflächenkontur aufweist.

In einer weiteren Fortbildung ist vorgesehen, dass die Einbauteile mittels eines vorzugsweise mehrachsigen Manipulators in die Teile des teilweise ausgeformten Vorformlings eingebracht werden.

Hierzu werden die beiden Blasformwerkzeughälften zuvor auseinander gefahren und der Zwischenrahmen entfernt.

Da die beiden Werkzeughälften mit den darin angeordneten Teilen des Vorformlings mittels des erfindungsgemäßen Verfahrens weitestgehend ohne Einschränkungen geöffnet und verfahren werden können ist jede Stelle im Innenraum des Kunststoffartikels zugänglich. Alle gewünschten Einlegeteile von einfachen bis komplexeren können entsprechend darin positioniert und eingelegt werden. Entsprechend dafür programmierte mehrachsige Roboter können diese Aufgabe problemlos bewältigen, wobei vorgesehen ist, dass die Einlegeteile einzeln, gemeinsam oder auch hintereinander in die beiden Formhälften eingelegt werden.

Besonders vorteilhaft ist es, wenn an mindestens einer der beiden Hälften des Blasformwerkzeuges Mittel angeordnet sind, die vor dem Entnehmen des Kunststoffartikels derart verfahren werden, dass überflüssige Teile des Vorformlings, sogenannte Butzen, die nicht zur bestimmungsgemäßen Verwendung des Kunststoffartikels benötigt werden, abgetrennt werden, wobei die überflüssigen Teile an einer der Blasformhälften verbleibt.

Es ist aber auch denkbar die überflüssigen Teile, bereits vor dem Ausformen des Kunststoffartikels abzutrennen, diese am Zwischenrahmen verbleiben und mit diesem entnommen werden. Unter Umständen kann das Abtrennen der Butzen schon bei Auftrennen des Vorformlings erfolgen.

Gemäß dieser Weiterbildung wird also vorgeschlagen, dass der umlaufende Rand um den Kunststoffartikel, der am fertig gestellten Artikel nicht mehr benötigt wird, bereits im Werkzeug abgetrennt wird. Dies minimiert die entsprechende Nachbearbeitungszeit am fertig geblasenen Kunststoffhohlkörper, da sämtliche nicht zu verwendenden Kunststoffteile bereits abgetrennt sind. Beispielsweise kann der Greifer für die Entnahme des Kunststoffteils aus dem Blasformwerkzeug so ausgestaltet sein, dass er auch diesen abgetrennten und im Werkzeug zurückbehaltenen überflüssigen Butzenanteil direkt mit entnimmt, den gefertigten Kunststoffhohlkörper ablegt und den Butzenanteil der Wiederverwendung für Recycling-Kunststoffe zuführt.

Die Aufgabe wird zusätzlich durch ein Blasformwerkzeug mit den Merkmalen des Anspruchs 11 oder des Anspruchs 12 gelöst. Der Zwischenrahmen ist mit flexiblen Bindemitteln versehen ist, wodurch der Zwischenrahmen in seiner Umfangsgeometrie veränderbar ist. Weiterbildungsgemäß ist vorgesehen, dass im Zwischenrahmen Öffnungen zum Einbringen von Blasluft vorgesehen sind.

Es wird also vorgeschlagen, dass der Zwischenrahmen in einer Form klappbar oder schwenkbar ist, damit entweder der Zwischenrahmen einfach in den Vorformling eingebracht werden kann, oder der Vorformling vereinfacht über den Zwischenrahmen gestülpt werden kann. Erst nach dem Ausklappen oder Verschwenken einzelner Rahmenteile wird die endgültige Umfangsgeometrie des Zwischenrahmens erzeugt, wodurch es ermöglicht wird, dass der darum angeordnete Vorformling quasi wie eine Verpackungsfolie sich um den Zwischenrahmen erschließt. Die Umfangsgeometrie des Zwischenrahmens ist dabei so ausgeführt, dass sich die Stirnflächen des Zwischenrahmens weitgehend mit den Stirnflächen der zum Einsatz kommenden Hälften des Blasformwerkzeuges gleichen, denn die Stirnseiten des Zwischenrahmens und die Stirnseiten der beiden Hälften des Blasformwerkzeuges bilden, nachdem das Blasformwerkzeug mit dem dazwischen liegenden Zwischenrahmen geschlossen ist, eine Dichtfläche.

Vorteilhafterweise werden in die Öffnungen für die Blasluft Blasdüsen eingeschraubt.

Es können also je nach Anforderung unterschiedliche Blasdüsen für unterschiedliche Blasdrücke in die im Zwischenrahmen angeordneten Öffnungen eingeschraubt werden, ohne dass die Versorgungsleitungen, die vorteilhafterweise an der Außenseite des Zwischenrahmens angebracht sind, mitgewechselt werden müssen.

Vorteilhafterweise besteht der Zwischenrahmen aus mehreren Stegen, die mit Bindemitteln verbunden sind, wobei erfindungsgemäß vorgeschlagen wird, hier Gelenke einzusetzen. Es ist aber auch jede andere Art von Bindemitteln denkbar, die ein Aufspreizen oder Aufklappen des Zwischenrahmens ermöglichen.

Weiterbildungsgemäß ist vorgesehen, dass der Zwischenrahmen eine Trennwand aufweist, die es ermöglicht, den Vorformling in zwei getrennte Kammern aufzuteilen, wobei die beiden Kammern mit unterschiedlichen Drücken beaufschlagbar sind. Beim Einsatz einer Trennwand kann der Zwischenrahmen auch einstückig sein, also nicht klapp oder schwenkbar. Dies ist aber nicht zwingend erforderlich, denn beim Einsatz einer beispielsweise flexiblen Trennwand, die je nach Ausgestaltung des Klappmechanismus des Zwischenrahmens mitschwenkt oder mitklappt, ist auch ein klappbarer Zwischenrahmen denkbar.

In den Zeichnungen wird schematisch eine erfindungsgemäße Vorrichtung gezeigt und das Verfahren erläutert:
- **Fig. 1**: zeigt eine perspektivische Ansicht einer Einrichtung zum Blasformen von Kunststoffartikeln mit einem geschlossenen Vorformling und Einsatz eines klappbaren Zwischenrahmens,
- **Fig. 2**: zeigt eine perspektivische Ansicht einer Einrichtung zum Blasformen von Kunststoffartikeln mit einem C-förmigen Vorformling und einem starren Zwischenrahmen,
- **Fig. 3**: eine perspektivische Ansicht einer geöffneten Blasform, in die ein Einlegeteil eingebracht wird,
- **Fig. 4**: einen Schnitt durch das Blasformwerkzeug, wobei der Vorformling am Zwischenrahmen anliegt,
- **Fig. 5**: einen Schnitt durch das Blasformwerkzeug, wobei der Vorformling vorgeblasen ist,
- **Fig. 6**: einen Schnitt durch das halbgeöffnete Blaswerkzeug nach der Auftrennung des Vorformlings,
- **Fig. 7**: eine Variante zu Figur 5 mit Formvoreilern,
- **Fig. 8**: die Variante nach Figur 7 nach dem Vorformen und Abtrennen der Butzen,
- **Fig. 9**: einen Schnitt durch das geöffnete Blaswerkzeug, in dem Einlegeteile eingebracht sind,
- **Fig. 10**: einen Schnitt durch das mit den Einlegteilen geschlossene Blaswerkzeug,
- **Fig. 11**: einen Schnitt durch das geschlossene Blaswerkzeug und den mit den Einlegeteilen fertig geblasenen Kunststoffartikel,
- **Fig. 12**: einen Schnitt durch das geöffnete Blaswerkzeug mit in einer Hälfte anhaftendem Kunststoffartikel,
- **Fig. 13**: einen Schnitt durch das Blasformwerkzeug, wobei der Kunststoffartikel entnommen wird,
- **Fig. 14**: einen spreizbaren Zwischenrahmen,
- **Fig. 15**: einen Schnitt durch den Zwischenrahmen und
- **Fig. 16**: einen Zwischenrahmen mit Trennwand.

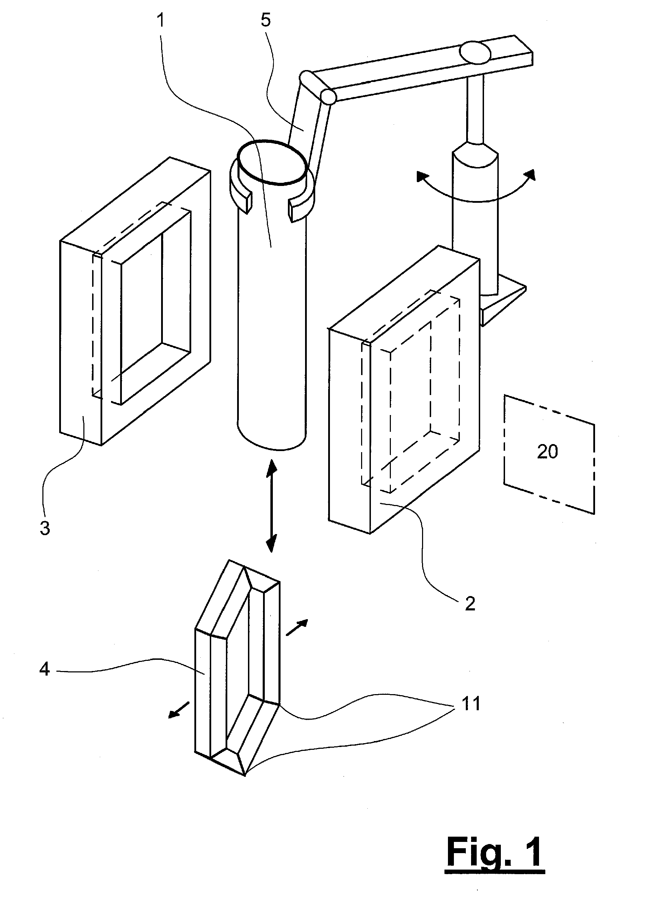

Figur 1 zeigt eine perspektivische Ansicht einer typischen Blasformanlage, bei der ein schlauchförmiger Vorformling 1 mittels eines Greifers zwischen einer ersten Hälfte 2 und einer zweiten Hälfte 3 eines Blasformwerkzeuges eingelegt wird. Die Möglichkeit des Verschwenkens des Greifers 5 wird über den halbrunden Doppelpfeil signalisiert. In dem Vorformling 1 wird ein klappbarer oder verschenkbarer Zwischenrahmen 4 angeordnet. Dieser Zwischenrahmen 4 kann entweder von unten in diesen eingeschoben oder der Vorformling über den bereits positionierten Zwischenrahmen 4 übergestülpt werden.

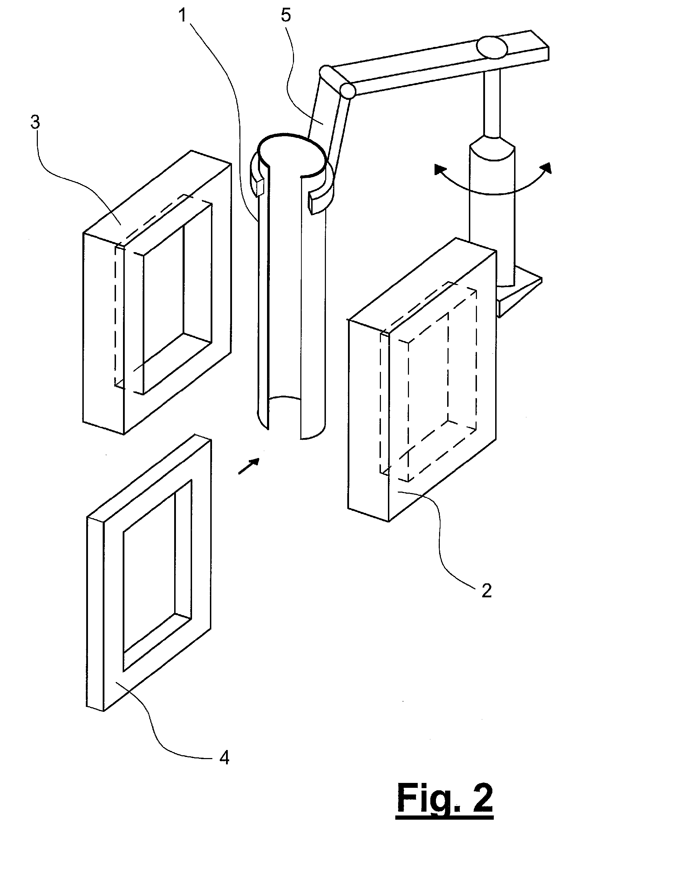

Figur 2 entspricht einer Anordnung wie Figur 1, wobei auch gleiche Positionsziffern gleiche Gegenstände wiedergeben. Figur 2 unterscheidet sich zu Figur 1 dadurch, dass der Vorformling 1 einen 5 C-förmigen Querschnitt aufweist und ein starrer Rahmen zum Einsatz kommt. Der Vorformling wurde also schon bereits vor dem Einbringen in die beiden Blasformhälften mindestens einseitig geschlitzt. Der verwendete Zwischenrahmen 4 ist starr und wird seitlich im Bereich des Schlitzes in den Vorformling 1 eingefahren. Auch hier ist es selbstverständlich möglich, den C-förmigen Vorformling über den starren Zwischenrahmen 4 zu bringen.

In beiden Fällen hat der Greifer 5 den Vorformling 1 von einem nicht dargestellten Extrusionskopf entnommen und in den Bereich zwischen den beiden Werkzeughälften 2 und 3 verfahren.

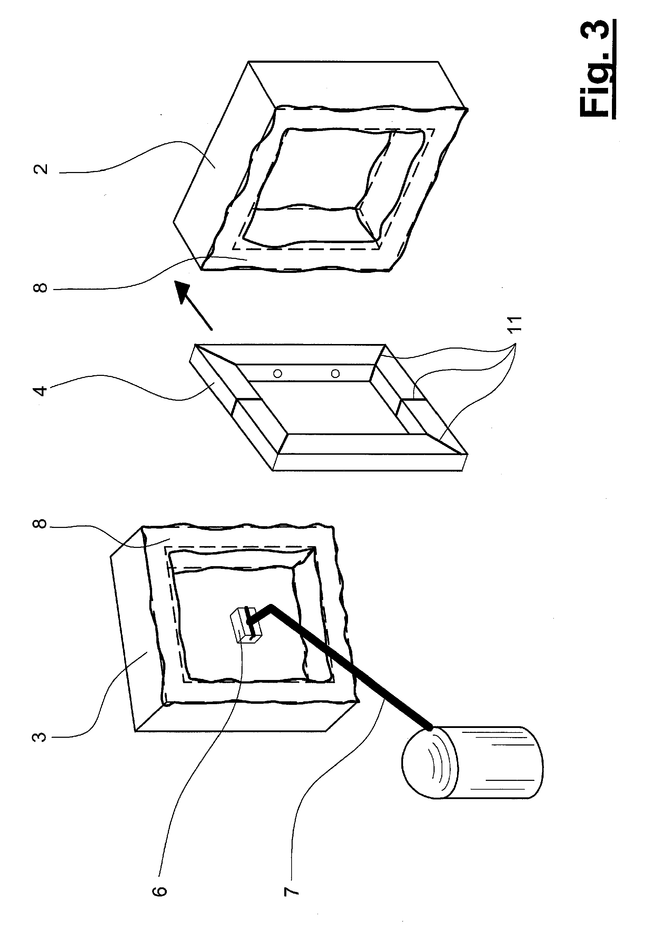

Figur 3 zeigt die beiden aufgeklappten Werkzeughälften 2, 3 des Blasformwerkzeuges, in denen je eine Teil 8 des aufgeschlitzten Vorformlings 1 angeordnet ist. Beispielhaft wird in den Teil 8 des Vorformlings 1 in der Werkzeughälfte 3 ein Einlegeteil 6 mittels eines Roboterarms 7 eines nicht dargestellten Roboters eingelegt und gegen die noch weiche Innenwandung des Teils 8 des Vorformlings 1 gedrückt. Der entfernbare Zwischenrahmen 4 zeigt die Bindemittel 11, die für das Klappen oder Verschwenken des Zwischenrahmens 4 erforderlich sind. Der Pfeil symbolisiert nur, dass der Zwischenrahmen 4 zwischen den beiden Hälften 2 und 3 des Blasformwerkzeuges entfernt werden kann, jedoch nicht die Verfahrrichtung des Zwischenrahmens 4.

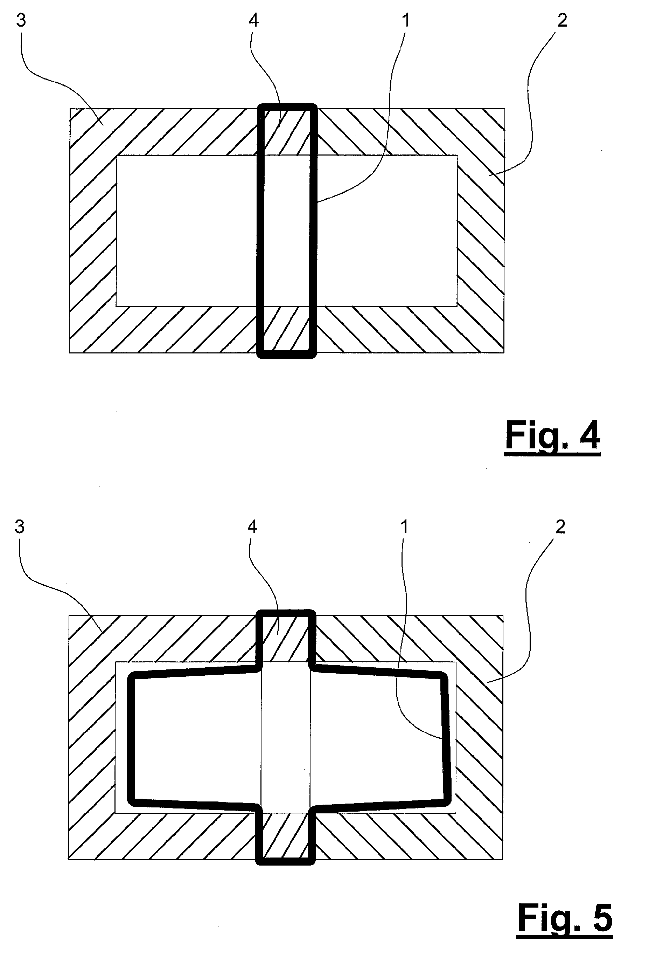

In den weiteren Figuren 4 bis 13 werden schematisch einzelne Verfahrensschritte in Schnittdarstellungen durch das Blasformwerkzeug wiedergegeben. Die Schnittebene 20 ist in Figur 1 skizziert.

Figur 4 zeigt die geschlossenen Blasformwerkzeughälften 2 und 3, wobei zwischen den beiden Hälften der Zwischenrahmen 4 angeordnet ist, um den sich der Vorformling 1 erstreckt.

Figur 5 zeigt wiederum das geschlossene Blasformwerkzeug mit den beiden Blasformwerkzeughälften 2 und 3 und dem dazwischen angeordneten Zwischenrahmen 4, wobei hier der Vorformling 1 über die nicht dargestellten Blasdüsen im Zwischenrahmen 4 vorgeformt wurde und sich bereits weitgehend an die Innenwandung der Blasformkavität anlegt.

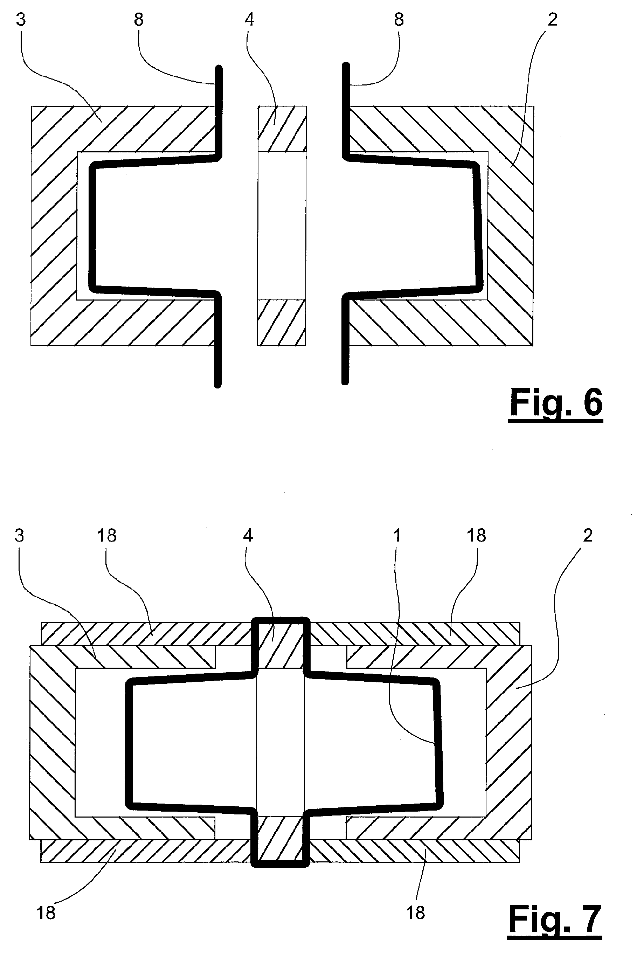

Figur 6 zeigt wieder die beiden Blasformwerkzeughälften 2 und 3, jedoch in einem teilweise geöffneten Zustand. Der Vorformling 1 wurde bereits in zwei Teile 8 getrennt, die sich in je einer der beiden Werkzeughälften 2 und 3 befinden. Der Zwischenrahmen 4 hat keine Verbindung mehr zu den Werkzeughälften oder zum Vorformling 1 und kann entfernt werden.

Figur 7 zeigt eine Variante unter Verwendung eines Formvoreilers 18. Wie bei Figur 5 umschließt der Vorformling 1 den Zwischenrahmen 4, jedoch dichten nicht Blasformwerkzeughälften 2 und 3 den Vorformling 1 gegen den Zwischenrahmen 4 ab, sondern an den Blasformwerkzeughälften angeordnete Formvoreiler 18.

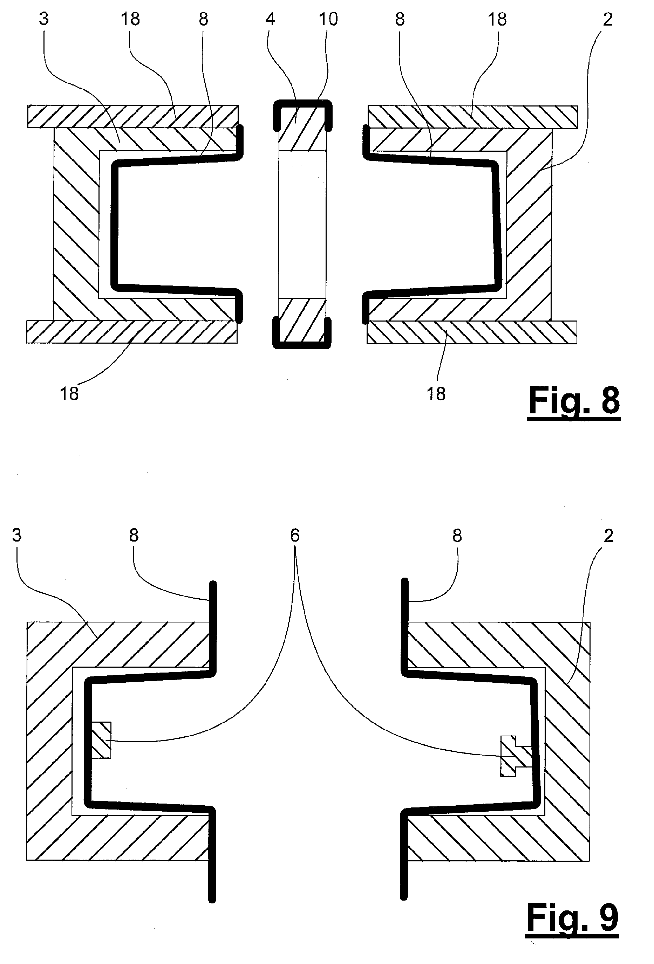

Figur 8 zeigt die Blasformwerkzeughälften 2 und 3 mit einem Vorformling 1 der in drei Teile aufgetrennt wurde. Zwei Teile 8 befindet sich in den Werkzeughälften 2 und 3, der dritte Teil 10 haftet als überflüssiger und nicht für den Artikel benötigter Kunststoffabfall, dem sogenannten Butzen, am Zwischenrahmen 4 und wird mit diesem entfernt.

Figur 9 zeigt wieder das geöffnete Blasformwerkzeug gemäß der Ausführungen nach den Figuren 4 bis 6, wobei sich wiederum ein Teil 8 des Vorformlings 1 in der Blasformwerkzeughälfte 3 und ein weiterer Teil 8 des Vorformlings 1 in der Blasformwerkzeughälfte 2 befinden. In jedem Teil 8 des Vorformlings 1 ist ein Einlegeteil 6 angeordnet. Es sei angemerkt, dass die beiden Blasformwerkzeughälften 2 und 3 nicht zwingend in eine Achse geöffnet werden müssen. Bedingt durch die Trennung des Vorformlings in mindestens zwei Teile 8 ist ein Öffnen des Werkzeuges in jede Achse möglich.

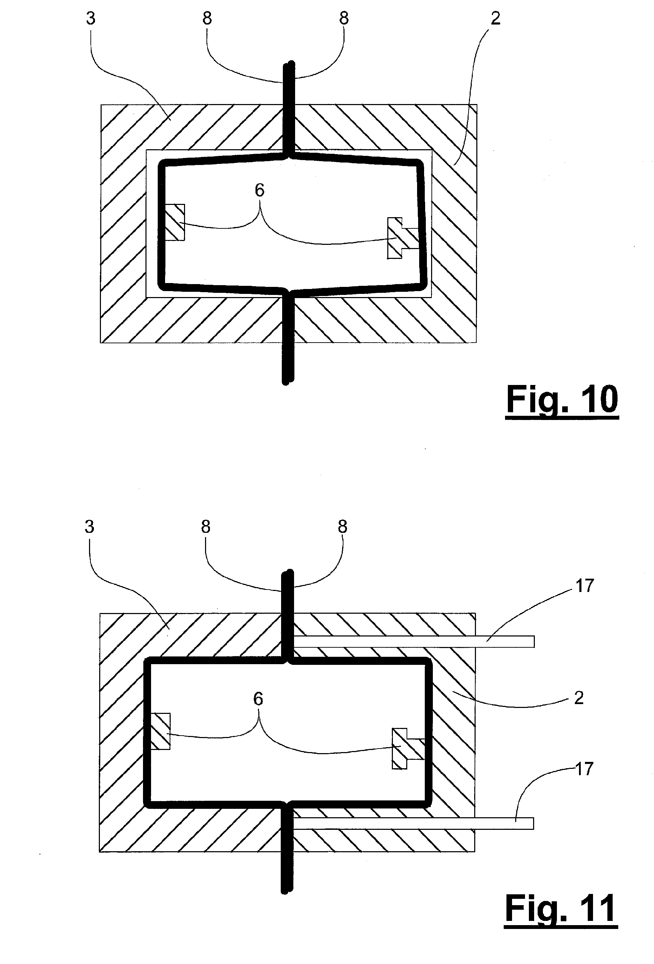

Figur 10 zeigt das wieder geschlossene Blasformwerkzeug, wobei hier der Zwischenrahmen 4 entfernt wurde, so dass die Teile 8 des Vorformlings 1 mit den darin befindlichen Einlegeteilen 6 nun durch das Schließen der beiden Blaswerkzeughälften 2 und 3 miteinander verbunden werden.

Gemäß der Darstellung in Figur 11 ist der Kunststoffartikel 9 ausgeformt, die Teile 8 des Vorformlings 1 sind also komplett an die Innenwandung des Blasformwerkzeuges mittels des Blasdruckes gebracht worden und schließen somit die Einlegeteile 6 in ihrem Inneren ein. In der Figur 11 sind weiterhin Abtrenner 17 zu sehen, mittels denen nicht mehr benötigte Teile des ehemaligen Vorformlings 1 abgetrennt werden können, indem diese innerhalb des Werkzeuges verfahren werden.

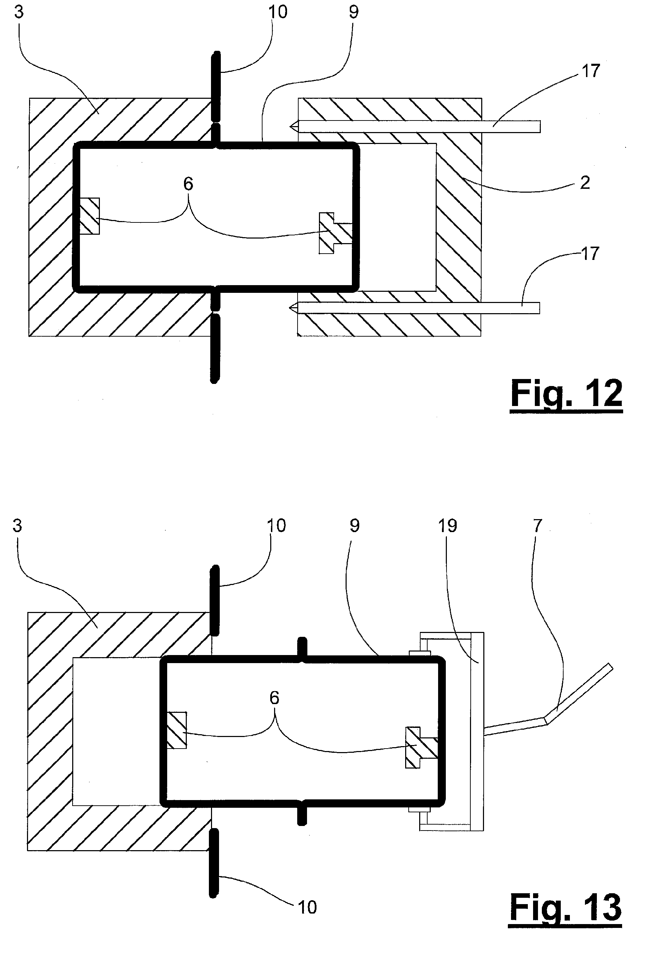

Wie in Figur 12 zu sehen ist, verbleibt der fertig geblasene Kunststoffartikel 9 in einer der beiden Werkzeughälften, hier in der Werkzeughälfte 3, und die überflüssigen Butzen 10, die über die Abtrenner 17 vom Kunststoffartikel 9 abgetrennt wurden, verbleiben ebenfalls an dieser Werkzeughälfte. Nachdem die Blasformwerkzeughälfte 2 ausreichend weit verfahren wurde, kann der Kunststoffartikel 9 entnommen werden.

Figur 13 zeigt diesen Schritt. Hier wird wiederum schematisch die Blasformwerkzeughälfte 3 gezeigt, an der noch der Butzen 10 haftet. Der fertig geblasene Kunststoffartikel 9 wird mittels eines Greifers 19 und eines Roboterarms 7 mittels eines nicht dargestellten Roboters entnommen. Die Butzen 10 können entweder direkt im gleichen Arbeitsgang durch den Roboter oder in einem späteren Arbeitsgang ebenfalls mittels eines Roboterarmes entnommen werden.

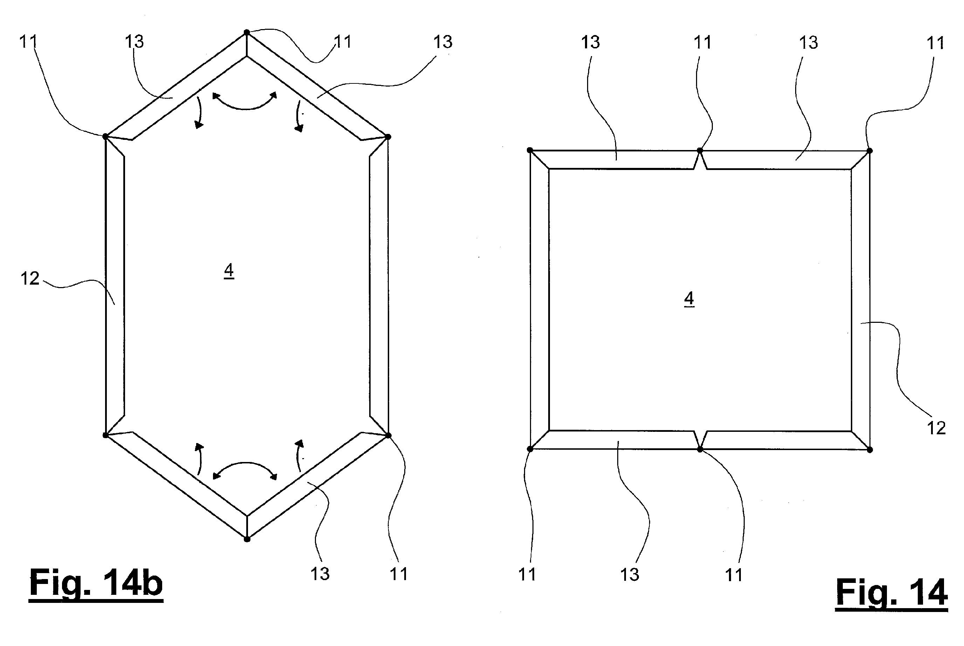

Figur 14 zeigt rein schematisch das Prinzip des schwenkbaren Zwischenrahmens 4. Figur 14 symbolisiert einen Zwischenrahmen mit mindestens zwei festen Stegen 12 und mehreren schwenkbaren Stegen 13. Zwischen den Stegen sind Bindemittel 11, hier in Form von Gelenken, angeordnet. Diese ermöglichen, dass die schwenkbaren Stege 13 derart verklappt werden können, dass der Abstand zwischen den beiden starren Stegen 12 vergrößert wird und somit beispielsweise der Vorformling um den Zwischenrahmen gespannt wird. Dies wird schematisch in Figur 14b wiedergegeben, wobei hier nur das Prinzip verdeutlicht werden soll, denn der Zwischenrahmen muss weitgehend die Stirnfläche des Blasformwerkzeuges wiedergeben, und wird daher in den seltensten Fällen ein Rechteck bilden.

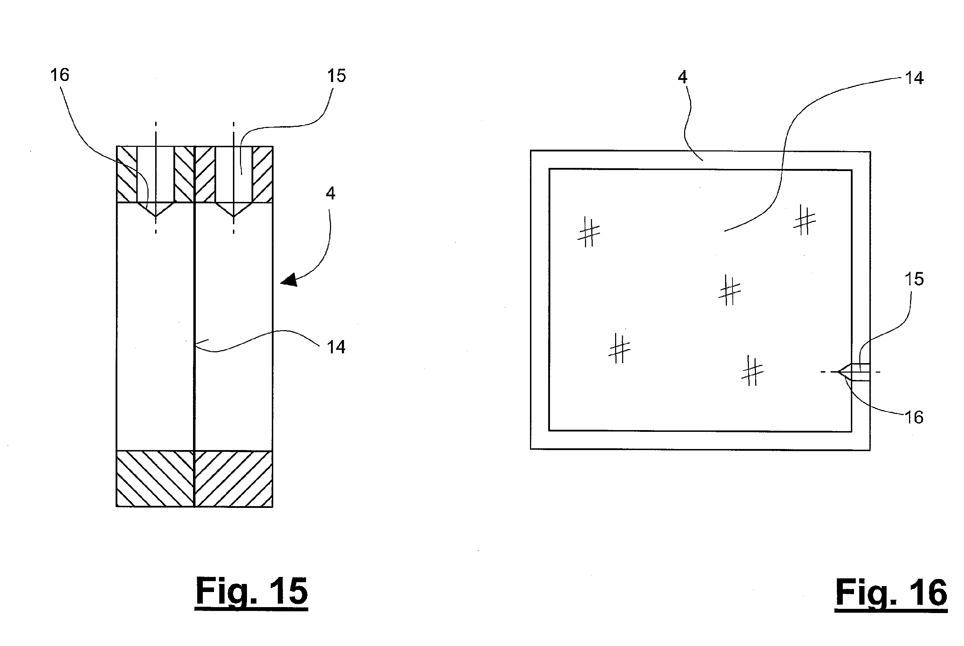

Figur 15 zeigt einen Schnitt durch einen Zwischenrahmen 4, wobei hier in der Mitte des Zwischenrahmens eine Trennwand 14 angeordnet ist. In einem Teil des Zwischenrahmens sind Öffnungen 15 vorgesehen, in die Blasdüsen 16 einmontiert sind.

Wiederum nur schematisch zur Wiedergabe des Prinzips ist in Figur 16 ein Standard-Zwischenrahmen 4 mit einer Trennwand 14, der Öffnung 15 und einer Blasdüse 16 gezeigt, wobei auch hier der Zwischenrahmen 4 nur zur Wiedergabe des Prinzips rechteckig dargestellt ist.

Mit dem erfindungsgemäßen Verfahren in Verbindung mit dem erfindungsgemäßen Zwischenrahmen ist es möglich, insbesondere größere blasgeformte Kunststoffartikel zu fertigen, in die auch komplexere und/oder große Einlegeteile einfach eingebunden werden können, da, bedingt durch das Trennen des Vorformlings in mindestens zwei Teile und das danach weit öffnungsbare Blasformwerkzeug, das Einbringen der Einlegeteile nicht behindert wird. Zugleich wird die Handhabung des Vorformlings deutlich verbessert.

### Bezugszeichenliste:

1 Vorformling
2 erste Hälfte eines Blasformwerkzeuges
3 zweite Hälfte eines Blasformwerkzeuges
4 Zwischenrahmen
5 Greifer
6 Einlegeteil
7 Roboterarm
8 Hälfte von 1
9 Kunststoffartikel
10 Butzen
11 Bindemittel in 4
12 Steg von 4
13 schwenkbarer Steg von 4
14 Trennwand in 4
15 Öffnung für Blasluft
16 Blasdüse
17 Abtrenner für 10
18 Formvoreiler
19 weiterer Greifer
20 Schnittebene

## Patentansprüche

1. Verfahren zur Herstellung eines Kunststoffartikels (9) umfassend das Extrudieren eines schlauchförmigen Vorformlings (1) aus einem Extrudat sowie das Umformen des Vorformlings (1) innerhalb eines Blasformwerkzeuges (2, 3) mit mindestens zwei Hälften (2, 3) unter Anwendung von Differenzdruck zu einem Hohlkörper (9), wobei ein Zwischenrahmen (4) in dem schlauchförmigen Vorformling (1) angeordnet und wenigstens ein Einbauteil (6) in das Innere des Kunststoffartikels (9) eingebracht wird,
**dadurch gekennzeichnet, dass**
- der schlauchförmige Vorformling (1) mittels des Zwischenrahmens (4) zwischen den mindestens zwei Hälften (2, 3) des Blasformwerkzeuges angeordnet wird,
- der schlauchförmige Vorformling (1) unter Zuhilfenahme des Zwischenrahmens (4) im Blasformwerkzeug (2, 3) teilweise vorgeformt wird,
- anschließend der schlauchförmige Vorformling (1) in mindestens zwei Teile (8) getrennt wird,
- das Blasformwerkzeug (2, 3) zum Einbringen des wenigstens einen Einbauteils (6) derart geöffnet wird, dass in jeder Hälfte (2, 3) des Blasformwerkzeuges ein Teil (8) des getrennten Vorformlings (1) verbleibt, gefolgt von den Verfahrensschritten:
(a) Entfernen des Zwischenrahmens (4) zwischen den mindestens zwei Hälften (2, 3) des Blasformwerkzeuges,
(b) Einbringen des wenigstens einen Einbauteils (6) in das Innere des teilweise ausgeformten Kunststoffartikels (9),
(c) Schließen des Blasformwerkzeuges (2, 3) mit den Teilen (8) des Vorformlings (1) und dem wenigstens einen Einbauteil (6) und
(d) vollständiges Ausformen des Vorformlings (1) zu einem Hohlkörper (6).

2. Verfahren nach Anspruch 1, **dadurch gekennzeichnet, dass** der schlauchförmige Vorformling (1) mit einem etwa C-förmigen Querschnitt in das Blasformwerkzeug (2, 3) eingelegt wird, wobei das aus dem Extrusionskopf austretende oder bereits ausgetretene Extrudat dafür entsprechend aufgetrennt wird.

3. Verfahren nach Anspruch 1 oder 2, **dadurch gekennzeichnet, dass** der Vorformling (1) an den Zwischenrahmen (4) angelegt wird indem der Zwischenrahmen (4) gespreizt und/oder Formvoreiler (18) entsprechend verfahren werden.

4. Verfahren nach mindestens einem der Ansprüche 1 bis 3, **dadurch gekennzeichnet, dass** das Vorformen des Vorformlings (1) über im Zwischenrahmen (4) angeordnete Blasdüsen (16) erfolgt.

5. Verfahren nach einem der Ansprüche 1 bis 4, **dadurch gekennzeichnet, dass** das Trennen des Vorformlings (1) in die mindestens zwei Teile (8) mittels einer im Zwischenrahmen (4) angeordneten Trennvorrichtung erfolgt.

6. Verfahren nach mindestens einem der Ansprüche 1 bis 5, **dadurch gekennzeichnet, dass** das Trennen des Vorformlings (1) in die mindestens zwei Teile (8) mittels von außen im Bereich des Zwischenrahmens (4) ansetzenden Trennmittel erfolgt.

7. Verfahren nach einem der Ansprüche 1 bis 6, **dadurch gekennzeichnet, dass** mittels des Zwischenrahmens (4) zwei getrennte Hohlräume zwischen dem Vorformling (1) und dem Zwischenrahmen (4) gebildet werden.

8. Verfahren nach Anspruch 7, **dadurch gekennzeichnet, dass** das Vorformen des Vorformlings (1) über Blasdüsen (16) erfolgt, wobei jeder der durch den Zwischenrahmen (4) gebildeten Hohlräume mit unterschiedlichen Drücken beaufschlagt werden kann.

9. Verfahren nach einem der Ansprüche 1 bis 8, **dadurch gekennzeichnet, dass** in mindestens einer der beiden Hälften (2, 3) des Blasformwerkzeuges Trennmittel (17) angeordnet sind, die derart verfahren werden, dass überflüssige Teile (10) des Vorformlings (1) abgetrennt werden.

10. Verfahren nach Anspruch 9, **dadurch gekennzeichnet, dass** die überflüssigen Teile (10) am Zwischenrahmen (4) verbleiben und mit diesem entnehmbar sind.

11. Blasformwerkzeug mit zwei Blasformwerkzeughälften zur Herstellung eines Kunststoffartikels (9), nach dem Verfahren eines der vorstehenden Ansprüche, umfassend einen Zwischenrahmen für das Blasformwerkzeug (2, 3, wobei
- der Zwischenrahmen (4) in einem schlauchförmigen Vorformling (1) und zwischen den zwei Blasformwerkzeughälften (2, 3) des Blasformwerkzeuges anordnungsbar ist und
- der Zwischenrahmen (4) mit flexiblen Bindemitteln (11) versehen ist, wodurch der Zwischenrahmen (4) in seiner Umfangsgeometrie veränderbar ist und
- eine endgültige Umfangsgeometrie des Zwischenrahmens durch Ausklappen erzeugbar ist,
**dadurch gekennzeichnet, dass**
- die endgültige Umfangsgeometrie des Zwischenrahmens derart ausgeführt ist, dass die Stirnseiten des Zwischenrahmens und die Stirnseiten der beiden Blasformwerkzeughälften eine Dichtfläche bilden, wenn das Blasformwerkzeug mit dem dazwischen liegenden Zwischenrahmen geschlossen ist.

12. Blasformwerkzeug mit zwei Blasformwerkzeughälften zur Herstellung eines Kunststoffartikels (9), nach dem Verfahren eines der vorstehenden Ansprüche, umfassend einen Zwischenrahmen für das Blasformwerkzeug (2, 3, wobei
- der Zwischenrahmen (4) in einem schlauchförmigen Vorformling (1) und zwischen den zwei Blasformwerkzeughälften (2, 3) des Blasformwerkzeuges anordnungsbar ist und
- der Zwischenrahmen (4) mit flexiblen Bindemitteln (11) versehen ist, wodurch der Zwischenrahmen (4) in seiner Umfangsgeometrie veränderbar ist und
- eine endgültige Umfangsgeometrie des Zwischenrahmens (4) durch Ausklappen erzeugbar ist,
**dadurch gekennzeichnet, dass**
- an den Blasformwerkzeughälften (2, 3) Formvoreiler (18) derart angeordnet sind, dass die Formvoreiler (18) den den Zwischenrahmen (4) umschließenden Vorformling (1) gegen den Zwischenrahmen (4) abdichten.

13. Blasformwerkzeug nach Anspruch 11 oder 12, **dadurch gekennzeichnet, dass** im Zwischenrahmen (4) Öffnungen (15) zum Einbringen von Blasluft vorgesehen sind.

14. Blasformwerkzeug nach einem der Ansprüche 11 bis 13, **dadurch gekennzeichnet, dass** als flexible Bindemittel (5 11) im Zwischenrahmen (4) Gelenke vorgesehen sind.

15. Blasformwerkzeug nach einem der Ansprüche 11 bis 14, **dadurch gekennzeichnet, dass** der Zwischenrahmen (4) mit einer Trennwand (14) versehen ist.

## Claims

1. A method for producing a plastic article (9) comprising extrusion of a tubular preform (1) from an extrudate and forming the preform (1) into a hollow body (9) inside a blow moulding tool (2, 3) having at least two halves (2, 3) by applying differential pressure, wherein an intermediate frame (4) is arranged in the tubular preform (1) and at least one insert (6) is introduced into the interior of the plastic article (9),
**characterized in that**
- the tubular preform (1) is arranged between the at least two halves (2, 3) of the blow moulding tool by means of the intermediate frame (4),
- the tubular preform (1) is partially preformed in the blow moulding tool (2, 3) with the aid of the intermediate frame (4),
- the tubular preform (1) is then separated into at least two parts (8),
- the blow moulding tool (2, 3) is opened in such a manner for introducing the at least one insert (6) that one part (8) of the separated preform (1) remains in each half (2, 3) of the blow moulding tool, followed by the process steps:
(a) removing the intermediate frame (4) between the at least two halves (2, 3) of the blow moulding tool,
(b) introducing the at least one insert (6) into the interior of the partially shaped plastic article (9),
(c) closing the blow moulding tool (2, 3) with the parts (8) of the preform (1) and the at least one insert (6), and
(d) fully shaping the preform (1) into a hollow body (6).

2. The method according to claim 1, **characterized in that** the tubular preform (1) having an approximately C-shaped cross-section is inserted into the blow moulding tool (2, 3), wherein the extrudate which is emerging or has already emerged from the extruder head is accordingly pulled apart for this purpose.

3. The method according to claim 1 or 2, **characterized in that** the preform (1) is placed against the intermediate frame (4) by spreading apart the intermediate frame (4) and/or moving mould spacers (18) accordingly.

4. The method according to at least one of claims 1 to 3, **characterized in that** the preforming of the preform (1) is accomplished by means of blowing nozzles (16) arranged in the intermediate frame (4).

5. The method according to any one of claims 1 to 4, **characterized in that** the separation of the preform (1) into at least two parts (8) is accomplished by means of a separating apparatus arranged in the intermediate frame (4).

6. The method according to any one of claims 1 to 5, **characterized in that** the separation of the preform (1) into at least two parts (8) is accomplished by means of separating means which are to be applied from the outside in the region of the intermediate frame (4).

7. The method according to any one of claims 1 to 6, **characterized in that** two separate cavities are formed between the preform (1) and the intermediate frame (4) by means of the intermediate frame (4).

8. The method according to claim 7, **characterized in that** the preform (1) is preformed by means of blowing nozzles (16), wherein each of the cavities formed by the intermediate frame (4) can be subjected to different pressures.

9. The method according to any one of claims 1 to 8, **characterized in that** separating means (17) are provided in at least one of the two halves (2, 3) of the blow moulding tool, which separating means are moved in such a manner that excess parts (10) of the preform (1) are separated.

10. The method according to claim 9, **characterized in that** the excess parts (10) remain on the intermediate frame (4) and are removed therewith.

11. A blow moulding tool having two blow moulding tool halves for producing a plastic article (9) according to the method of one of the preceding claims, comprising an intermediate frame for the blow moulding tool (2, 3), wherein
- the intermediate frame (4) can be arranged in a tubular preform (1) and between the two blow moulding tool halves (2, 3) of the blow moulding tool and
- the intermediate frame (4) is provided with flexible binding means (11) whereby the intermediate frame (4) can be varied in its circumferential geometry and
- a final circumferential geometry of the intermediate frame can be produced by folding out,
**characterized in that**
- the final circumferential geometry of the intermediate frame is designed in such a manner that the end faces of the intermediate frame and the end faces of the two blow moulding tool halves form a sealing face, when the blow moulding tool with the intermediate frame lying therebetween is closed.

12. The blow moulding tool having two blow moulding tool halves for producing a plastic article (9) according to the method of one of the preceding claims, comprising an intermediate frame for the blow moulding tool (2, 3), wherein
- the intermediate frame (4) can be arranged in a tubular preform (1) and between the two blow moulding tool halves (2, 3) of the blow moulding tool and
- the intermediate frame (4) is provided with flexible binding means (11) whereby the intermediate frame (4) can be varied in its circumferential geometry and
- a final circumferential geometry of the intermediate frame (4) can be produced by folding out,
**characterized in that**
- mould spacers (18) are arranged on the blow moulding tool halves (2, 3) in such a manner that the mould spacers (18) seal the preform (1) surrounding the intermediate frame (4) against the intermediate frame (4).

13. The blow moulding tool according to claims 11 or 12, **characterized in that** openings (15) for the introduction of blowing air are provided in the intermediate frame (4).

14. The blow moulding tool according to any one of claims 11 to 13, **characterized in that** joints are provided as flexible binding means (5, 11) in the intermediate frame (4).

15. The blow moulding tool according to any one of claims 11 to 14, **characterized in that** the intermediate frame (4) is provided with a partition wall (14).

## Revendications

1. Procédé destiné à fabriquer un article (9) en matière plastique, comprenant l'extrusion d'une ébauche (1) de forme tubulaire en un produit extrudé, ainsi que la transformation de l'ébauche (1) en un corps creux (9), à l'intérieur d'un outil de soufflage sur matrice (2, 3) avec au moins deux moitiés (2, 3) en utilisant une pression différentielle, lors duquel on place un cadre intermédiaire (4) dans l'ébauche (1) de forme tubulaire et on introduit au moins un élément encastré (6) à l'intérieur de l'article (9) en matière plastique
**caractérisé en ce**
- **qu'**on place l'ébauche (1) de forme tubulaire au moyen du cadre intermédiaire (4) entre les au moins deux moitiés (2, 3) de l'outil de soufflage sur matrice,
- on s'aidant du cadre intermédiaire (4), on préfaçonne en partie l'ébauche (1) de forme tubulaire dans l'outil de soufflage sur matrice (2, 3),
- on sectionne ensuite l'ébauche (1) de forme tubulaire en au moins deux parties (8),
- pour l'introduction de l'au moins un élément encastré (6), on ouvre l'outil de soufflage sur matrice (2, 3) de telle sorte que dans chaque moitié (2, 3) de l'outil de soufflage sur matrice, il reste une partie (8) de l'ébauche (1) sectionnée, ceci étant suivi des étapes de procédé suivantes :
(a) retrait du cadre intermédiaire (4) entre les au moins deux moitiés (2, 3) de l'outil de soufflage sur matrice,
(b) introduction de l'au moins un élément encastré (6) à l'intérieur de l'article (9) en matière plastique partiellement démoulé,
(c) fermeture de l'outil de soufflage sur matrice (2, 3) avec les parties (8) de l'ébauche (1) et l'au moins un élément encastré (6) et
(d) démoulage complet de l'ébauche (1) en un corps creux (6).

2. Procédé selon la revendication 1, **caractérisé en ce qu'**on insère l'ébauche (1) de forme tubulaire avec une section transversale approximativement en forme de C dans l'outil de soufflage sur matrice (2, 3), le produit extrudé sortant ou déjà sorti de la tête d'extrusion étant séparé en conséquence à cet effet.

3. Procédé selon la revendication 1 ou la revendication 2, **caractérisé en ce qu'**on appuie l'ébauche (1) sur le cadre intermédiaire (4) en écartant le cadre intermédiaire (4) et/ou en déplaçant en conséquence des dispositifs de glissement en avant (18).

4. Procédé selon au moins l'une quelconque des revendications 1 à 3, **caractérisé en ce que** le préfaçonnage de l'ébauche (1) s'effectue par l'intermédiaire de buses de soufflage (16) placées dans le cadre intermédiaire (4).

5. Procédé selon l'une quelconque des revendications 1 à 4, **caractérisé en ce que** le sectionnement de l'ébauche (1) dans les au moins deux parties (8) s'effectue au moyen d'un dispositif de sectionnement placé dans le cadre intermédiaire (4).

6. Procédé selon au moins l'une quelconque des revendications 1 à 5, **caractérisé en ce que** le sectionnement de l'ébauche (1) en les au moins deux parties (8) s'effectue à l'aide de moyens de séparation devant être mis en application par l'extérieur, dans la région du cadre intermédiaire (4).

7. Procédé selon l'une quelconque des revendications 1 à 6, **caractérisé en ce qu'**à l'aide du cadre intermédiaire (4), on forme deux cavités séparées entre l'ébauche (1) et le cadre intermédiaire (4).

8. Procédé selon la revendication 7, **caractérisé en ce que** le préfaçonnage de l'ébauche (1) s'effectue par l'intermédiaire de buses de soufflage (16), chacune des cavités formées par le cadre intermédiaire (4) pouvant être soumise à des pressions différentes.

9. Procédé selon l'une quelconque des revendications 1 à 8, **caractérisé en ce que** dans au moins l'une des deux moitiés (2, 3) de l'outil de soufflage sur matrice sont placés des moyens de sectionnement (17) que l'on déplace de telle sorte que des parties (10) superflues de l'ébauche (1) soient sectionnées.

10. Procédé selon la revendication 9, **caractérisé en ce que** les parties (10) superflues restent sur le cadre intermédiaire (4) et peuvent être retirées avec celui-ci.

11. Outil de soufflage sur matrice avec deux moitiés d'outil de soufflage sur matrice, destiné à fabriquer un article (9) en matière plastique selon le procédé de l'une quelconque des revendications précédentes, comprenant un cadre intermédiaire pour l'outil de soufflage sur matrice (2, 3)
- le cadre intermédiaire (4) pouvant être placé dans une ébauche (1) de forme tubulaire et entre les deux moitiés d'outil de soufflage sur matrice (2, 3) de l'outil de soufflage sur matrice et
- le cadre intermédiaire (4) étant muni de moyens de liaison (11) flexibles, en conséquence de quoi, le cadre intermédiaire (4) est variable dans sa géométrie périphérique et
- une géométrie périphérique finale du cadre intermédiaire pouvant être créée par déploiement,
**caractérisé en ce que**
- la géométrie périphérique finale du cadre intermédiaire est réalisée de telle sorte que les faces frontales du cadre intermédiaire et les faces frontales des deux moitiés d'outil de soufflage sur matrice forment une surface d'étanchéité lorsque l'outil de soufflage sur matrice est fermé avec le cadre intermédiaire interposé.

12. Outil de soufflage sur matrice avec deux moitiés d'outil de soufflage sur matrice, destiné à fabriquer un article (9) en matière plastique, selon le procédé de l'une quelconque des revendications précédentes, comprenant un cadre intermédiaire pour l'outil de soufflage sur matrice (2, 3)
- le cadre intermédiaire (4) pouvant être placé dans une ébauche (1) de forme tubulaire et entre les deux moitiés d'outil de soufflage sur matrice (2, 3) de l'outil de soufflage sur matrice et
- le cadre intermédiaire (4) étant muni de moyens de liaison (11) flexibles, en conséquence de quoi, le cadre intermédiaire (4) est variable dans sa géométrie périphérique et
- une géométrie périphérique finale du cadre intermédiaire (4) pouvant être créée par déploiement,
**caractérisé en ce que**
- sur les moitiés d'outil de soufflage sur matrice (2, 3), des dispositifs de glissement en avant (18) sont placés de telle sorte que les dispositifs de glissement en avant (18) assurent l'étanchéité de l'ébauche (1) entourant le cadre intermédiaire (4) par rapport au cadre intermédiaire (4).

13. Outil de soufflage sur matrice selon la revendication 11 ou la revendication 12, **caractérisé en ce que** dans le cadre intermédiaire (4) sont prévus des orifices (15) destinés à introduire de l'air de soufflage.

14. Outil de soufflage sur matrice selon l'une quelconque des revendications 11 à 13, **caractérisé en ce que** des articulations sont prévues en tant que moyens de liaison (5, 11) flexibles dans le cadre intermédiaire (4).

15. Outil de soufflage sur matrice selon l'une quelconque des revendications 11 à 14, **caractérisé en ce que** le cadre intermédiaire (4) est muni d'une paroi de séparation (14).
